# FASCICULE DE BREVET EUROPEEN

(11) **EP 0 634 312 B1**
(45) Date de publication et mention de la délivrance du brevet: **09.04.1997**
(21) Numéro de dépôt: 94401543.7
(22) Date de dépôt: 05.07.1994
(51) Int. Cl.: B62D 1/16, F16L 3/14

(54) **Dispositif de fixation d'un ensemble de colonne de direction sur le reste de la structure d'un véhicule automobile**
Vorrichtung zur Befestigung einer Lenksäule am Rest der Struktur eines Kraftfahrzeugs
Device for mounting a steering column on the rest of a structure of a motor vehicle

(30) Priorité: 16.07.1993 FR 9308775
(43) Date de publication de la demande: 18.01.1995
(73) Titulaire: ECIA - EQUIPEMENTS ET COMPOSANTS POUR L'INDUSTRIE AUTOMOBILE, F-25400 Audincourt (FR)
(72) Inventeur: Mouhot, Frédéric, F-25420 Voujeaucourt (FR)
(74) Mandataire: Habasque, Etienne Joel Jean-François

(56) Documents cités:
- EP-A- 0 270 311
- EP-A- 0 444 996
- GB-A- 1 292 256

## Description

La présente invention concerne un dispositif de fixation d'un ensemble de colonne de direction sur le reste de la structure d'un véhicule automobile, tel que défini dans le préambule de la revendication 1.

On trouvera un exemple de réalisation d'un tel dispositif dans la demande de brevet EP-A-0 444 996 au nom de la Demanderesse.

Dans ce document, des moyens tendant à écarter l'ensemble de colonne de direction du reste de la structure du véhicule, sont interposés entre les moyens d'accrochage et les moyens de serrage et ces moyens de serrage sont adaptés pour assurer un montage sous contrainte de l'ensemble sur le reste du véhicule par sollicitation angulaire de l'ensemble de colonne de direction vers le reste de la structure du véhicule.

On conçoit que cette structure peut présenter dans certains cas d'implantation d'ensembles de colonne, des inconvénients de montage, du fait de la difficulté d'accès aux moyens de serrage.

Le but de l'invention est donc de résoudre ces problèmes.

A cet effet, l'invention a pour objet un dispositif de fixation d'un ensemble de colonne de direction sur le reste de la structure d'un véhicule automobile, comportant les caractéristiques définies dans la partie caractérisante de la revendication 1.

L'invention sera mieux comprise à l'aide de la description qui va suivre, donnée uniquement à titre d'exemple et faite en se référant aux dessins annexés, sur lesquels :
- la Fig.1 représente une vue schématique de côté d'un dispositif de fixation selon l'invention; et
- la Fig.2 représente une vue de face d'une bride de fixation entrant dans la constitution d'un dispositif selon l'invention.

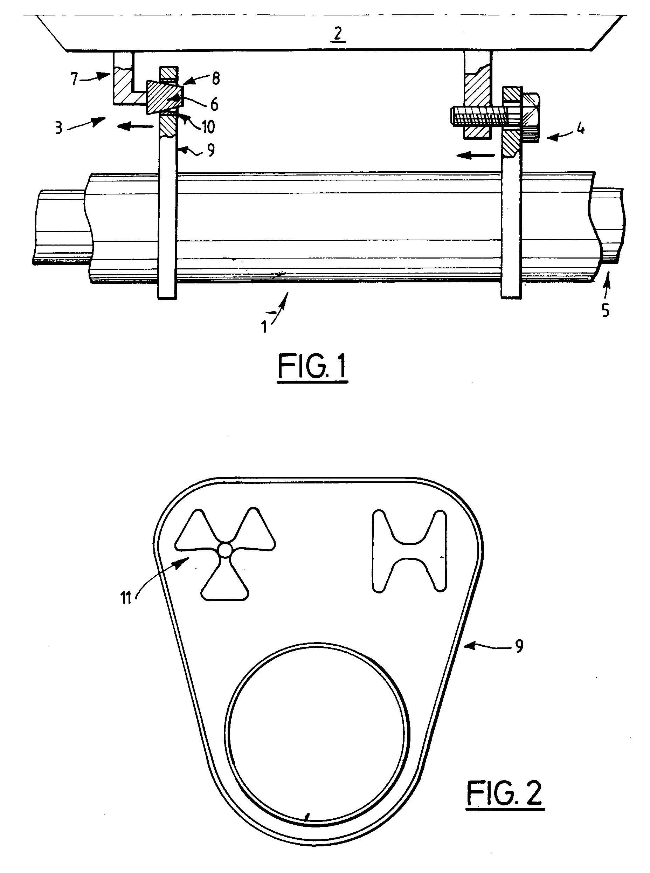

Ainsi qu'on peut le voir sur ces figures, un dispositif de fixation selon l'invention est adapté pour permettre la fixation d'un ensemble de colonne de direction désigné par la référence générale 1 sur la figure 1, par exemple d'un véhicule automobile, sur le reste de la structure de celui-ci, désignée de façon générale par la référence 2.

Ce dispositif comporte à proximité de l'une des extrémités de l'ensemble de colonne de direction des moyens d'accrochage de celui-ci sur le reste de la structure du véhicule, ces moyens d'accrochage étant désignés par la référence générale 3.

A proximité de l'autre extrémité de cet ensemble, le dispositif comporte des moyens de serrage de celui-ci sur le reste de la structure. Ces moyens de serrage sont désignés de façon générale par la référence 4 et permettent d'assurer un montage sous contrainte de l'ensemble de colonne sur le reste du véhicule.

Dans le dispositif de fixation selon l'invention, les moyens de serrage 4 sont prévus à proximité de l'extrémité de l'ensemble de colonne de direction adaptée pour recevoir en 5 un volant de direction, tandis que les moyens d'accrochage 3 sont prévus à l'autre extrémité de cet ensemble de colonne.

Les moyens de serrage sont adaptés pour provoquer une sollicitation axiale en translation de l'ensemble de colonne par rapport au reste de la structure du véhicule et les moyens d'accrochage se présentent sous la forme de moyens d'accrochage à effet de coincement axial.

En effet, dans le mode de réalisation représenté, ces moyens d'accrochage comprennent par exemple au moins un organe en forme de coin 6 fixé sur une patte d'accrochage 7 reliée au reste de la structure du véhicule, cet organe en forme de coin 6 étant adapté pour s'engager dans un évidement correspondant 8 d'une bride 9 reliée à l'ensemble de colonne de direction 1.

Un manchon élastique 10 peut être disposé dans cet évidement 8 de la bride, pour assurer un certaine élasticité de la liaison de ces moyens d'accrochage.

On conçoit alors que les directions d'engagement des moyens d'accrochage et de serrage des moyens de serrage sont les mêmes et que plus on serre les moyens de serrage 4, plus la bride 9 s'engage autour de l'organe en forme de coin 6, pour assurer le montage sous contrainte de l'ensemble de colonne sur le reste de la structure du véhicule.

Il va de soi bien entendu que différents modes de réalisation de ces moyens de serrage et de ces moyens d'accrochage peuvent être envisagés.

C'est ainsi par exemple que les moyens de serrage peuvent comporter deux organes de serrage tels que des vis, disposés de part et d'autre de l'ensemble de colonne de direction et adaptés pour coopérer par exemple avec des trous taraudés d'une patte reliée au reste de la structure du véhicule et que les moyens d'accrochage peuvent comporter deux jeux d'organes en forme de coin et d'évidements de bride correspondants, disposés de part et d'autre de l'ensemble de colonne.

Par ailleurs, l'élasticité de la liaison des moyens d'accrochage 3 peut également être obtenue par des moyens autres que le manchon élastique 10 comme par exemple par des languettes 11 déformables élastiquement venues de matière avec la bride et coopérant avec l'organe en forme de coin, comme on peut le voir sur la Fig.2.

Bien entendu, ces languettes peuvent présenter différentes formes, comme cela est illustré.

On conçoit alors que la structure de ce dispositif de fixation permet un montage extrêmement simple de l'ensemble de colonne sur le reste de la structure du véhicule, car il suffit d'engager les moyens d'accrochage les uns dans les autres, puis les moyens de serrage dans les trous taraudés correspondants et enfin de serrer ceux-ci, pour obtenir le montage sous contrainte de l'ensemble sur le reste du véhicule.

La structure de ce dispositif et en particulier la présence des moyens élastiques dans les moyens d'accrochage associés aux moyens de serrage permet d'absorber les différents jeux de montage.

Bien entendu, d'autres modes de réalisation peuvent être envisagés et il va de soi que les organes en forme de coin peuvent également être solidaires de la bride 9 de l'ensemble de colonne, tandis que les évidements correspondants sont formés dans la patte d'accrochage 7 reliée au reste de la structure du véhicule.

## Revendications

1. Dispositif de fixation d'un ensemble de colonne de direction (1) sur le reste de la structure (2) d'un véhicule automobile, comportant à proximité de l'extrémité (5) de l'ensemble de colonne de direction adaptée pour recevoir le volant de direction, des moyens de serrage (4) et à proximité de l'autre extrémité de celui-ci, des moyens d'accrochage (3) de celui-ci sur le reste de la structure du véhicule, pour assurer un montage sous contrainte de l'ensemble de colonne sur le reste de la structure du véhicule, par sollicitation de l'ensemble de colonne de direction lors du serrage des moyens de serrage, caractérisé en ce que les moyens d'accrochage (3) se présentent sous la forme de moyens à effet de coincement axial, en ce que les directions d'engagement des moyens d'accrochage (3) et des moyens de serrage (4) sont les mêmes et en ce que les moyens de serrage (4) sont adaptés pour provoquer une sollicitation axiale en translation de l'ensemble de colonne de direction (1) par rapport au reste de la structure du véhicule, pour engendrer l'effet de coincement axial des moyens d'accrochage et le montage sous contrainte de l'ensemble sur le reste de la structure du véhicule, consécutivement au serrage des moyens de serrage.

2. Dispositif selon la revendication 1, caractérisé en ce que les moyens d'accrochage à effet de coincement axial comportent au moins un organe en forme de coin (6) relié à l'un des éléments, ensemble de colonne de direction ou reste de la structure du véhicule et adapté pour coopérer avec un évidement correspondant (8) de l'autre élément, reste de la structure du véhicule ou ensemble de colonne de direction.

3. Dispositif selon la revendication 2, caractérisé en ce que les moyens d'accrochage (3) comportant deux organes en forme de coin disposés de part et d'autre de l'ensemble de colonne et adaptés pour coopérer chacun avec un évidement correspondant.

4. Dispositif selon la revendication 2 ou 3, caractérisé en ce que des moyens déformables élastiquement sont disposés entre le ou chaque organe en forme de coin et l'évidement correspondant.

5. Dispositif selon la revendication 4, caractérisé en ce que les moyens élastiques sont formés par un manchon (10).

6. Dispositif selon la revendication 4, caractérisé en ce que les moyens élastiques sont formés par des languettes (11) s'étendant dans l'évidement.

## Claims

1. A device for fixing a steering column assembly (1) to the rest of the structure (2) of a motor vehicle, comprising clamping means (4) near the end (5) of the steering column assembly adapted to receive the steering wheel and, near the other end thereof, means of attaching (3) the steering column assembly to the rest of the vehicle structure, in order to mount the column assembly under stress on the rest of the vehicle structure by stressing the steering column assembly at the time the clamping means are clamped, characterised in that the attaching means (3) take the form of means having an axial wedging effect, in that the engaging directions of the attaching means (3) and the clamping means (4) are the same and in that the clamping means (4) are adapted to cause an axial stress on the steering column assembly (1) translated in relation to the rest of the vehicle structure in order to generate the axial wedging effect of the attaching means and the mounting under stress of the assembly on the rest of the vehicle structure, consecutively to the clamping or the clamping means.

2. A device according to claim 1, characterised in that the attaching means having an axial wedging effect comprise at least one wedge-shaped member (6) linked to one of the elements, steering column assembly or rest of the vehicle structure and adapted to cooperate with a corresponding recess (8) in the other element, rest of the vehicle structure or steering column assembly.

3. A device according to claim 2, characterised in that the attaching means (3) comprise two wedge-shaped members arranged on either side of the steering column assembly, each member being adapted to cooperate with a corresponding recess.

4. A device according to claim 2 or 3, characterised in that elastically deformable means are arranged between the or each wedge-shaped member and the corresponding recess.

5. A device according to claim 4, characterised in that the elastic means are formed by a sleeve (10).

6. A device according to claim 4, characterised in that the elastic means are formed by tongues (11) extending into the recess.

## Patentansprüche

1. Vorrichtung zur Befestigung einer Lenksäulenanordnung (1) an der übrigen Struktur (2) eines Kraftfahrzeugs, die in der Nähe des Endes (5) der Lenksäulenanordnung, das zur Aufnahme des Lenkrades vorgesehen ist, Klemmittel (4) und In der Nähe des anderen Endes der Lenksäulenanordnung Verankerungsmittel (3) für die Verankerung der Lenksäulenanordnung an der übrigen Struktur des Fahrzeugs umfaßt, zur Ermöglichung einer Montage der Lenksäulenanordnung an der übrigen Struktur des Fahrzeugs unter Belastung, durch Belastung der Lenksäulenanordnung während des Klemmens der Klemmittel, **dadurch gekennzeichnet**, daß die Verankerungsmittel (3) die Form von Mitteln mit Axialklemmung aufweisen, daß die Richtungen des Eingriffs der Verankerungsmittel (3) und der Klemmittel (4) gleich sind und daß die Klemmittel (4) eine axial translatorische Belastung in Längsrichtung der Lenksäulenanordnung (1) in bezug auf die übrige Struktur des Fahrzeugs ausüben, zur Bildung des axialen Spanneffekts der Verankerungsmittel und Montage der Anordnung an der übrigen Struktur unter Belastung anschließend an die Klemmung der Klemmittel.

2. Vorrichtung nach Anspruch 1, dadurch **gekennzeichnet**, daß die Verankerungsmittel mit Axialklemmeffekt wenigstens ein Organ in der Form eines Keiles (6) umfassen, das an einem der Elemente - Lenksäulenanordnung oder übrige Struktur des Fahrzeugs - befestigt und vorgesehen ist zum Zusammenwirken mit einer entsprechenden Ausnehmung (8) des anderen Elements - übrige Struktur des Fahrzeugs oder Lenksäulenanordnung-.

3. Vorrichtung nach Anspruch 2, dadurch **gekennzeichnet**, daß die Verankerungsmittel (3) zwei Organe in der Form eines Keiles umfassen, die auf beiden Selten der Lenksäulenanordnung angeordnet sind und jeweils mit einer entsprechenden Ausnehmung zusammenwirken.

4. Vorrichtung nach einem der Ansprüche 2 oder 3, dadurch **gekennzeichnet**, daß elastisch verformbare Mittel zwischen dem oder jedem Organ in der Form eines Keiles und der entsprechenden Ausnehmung vorgesehen sind.

5. Vorrichtung nach Anspruch 4, dadurch **gekennzeichnet**, daß die elastischen Mittel durch eine Muffe (10) gebildet werden.

6. Vorrichtung nach Anspruch 4, dadurch **gekennzeichnet**, daß die elastischen Mittel durch Zungen (11) gebildet werden, die sich in die Ausnehmung hinein erstrecken.
